Europäisches Patentamt

European Patent Office

Office européen des brevets

(11) Publication number: **0 123 656**
**A1**

## (12) EUROPEAN PATENT APPLICATION

(21) Application number: **84830045.5**

(22) Date of filing: **21.02.84**

(51) Int. Cl.³: **D 07 B 3/10**

(30) Priority: **21.04.83 IT 2161283 U**

(43) Date of publication of application:
**31.10.84 Bulletin 84/44**

(84) Designated Contracting States:
**CH DE FR GB LI**

(71) Applicant: **OFFICINE MECCANICHE DI LESMO S.p.A.**
**Via delle Officine, 7**
**Lesmo (Milano)(IT)**

(72) Inventor: **Fumagalli, Alberto**
**Via Vanvitelli, 6/A**
**Milano(IT)**

(74) Representative: **Caregaro, Silvio et al,**
**c/o Società Italiana Brevetti S.p.A. Via Carducci 8**
**I-20123 Milano(IT)**

(54) **Stranding machine provided with dynamically compensated wire supporting bow.**

(57) Wire stranding machine to produce cables, metal wire ropes and other similar means, in which a plurality of metal wires are grouped together and twisted by means of a rotating structure comprising a supporting bow (6) for the wires which rotates at high speed, while the cable thus formed is drawn and wound up on a collecting spool (9). The ends of said bow are secured on plates or clamps (5) suitably supported for rotation and each clamp (5) mounts at least one balancing mass, apt to compensate the centrifugal forces produced by the bow (6) while rotating.

FIG. 1

EP 0 123 656 A1

"STRANDING MACHINE PROVIDED WITH DYNAMICALLY COMPENSATED WIRE SUPPORTING BOW"

This invention relates to a wire stranding machine to produce braided cables, metal wire ropes and other similar means, in which a plurality of metal wires are grouped together and twisted by means of a rotating structure comprising a supporting bow for the wires which rotates at high speed, while the plait or cable thus formed is drawn and wound up on a collecting spool.

Machines of the above type are provided with a rotating structure consisting of a frame and two pairs of terminal collects or plates between which are secured the ends of a flexible metal element commonly called bow, provided with suitable eyelets.

Because of the high rotational speed of the rotating structure, the supporting bow for the wire must necessarily be counter-balanced by a corresponding bow on the opposite part, so as to render the structure symmetrical. This necessitates the application of an additional peripheral mass which however gives rise to a dissipation of power which is not negligible, due to the high rotating speed of the structure.

The object of this invention is to provide a stranding machine of the type above described but having an improved rotating structure and provided with a single wire support ing bow, suitably balanced by masses fitted on the support

- 2 -

ing plates or clamps themselves. In this manner, a perfectly balanced machine is obtained, which affords substantially reduced power consumption and permits, moreover better accessibility for the intervention of the operator when the machine is not running, thanks to the elimination of the ancillary bow.

The invention will now be described in conjunction with the annexed drawings, in which:

FIGURE 1 is an overall schematic view of the stranding machine;

FIGURES 2 thru 9 show the balancing of the single bow by means of masses fitted on the clamps.

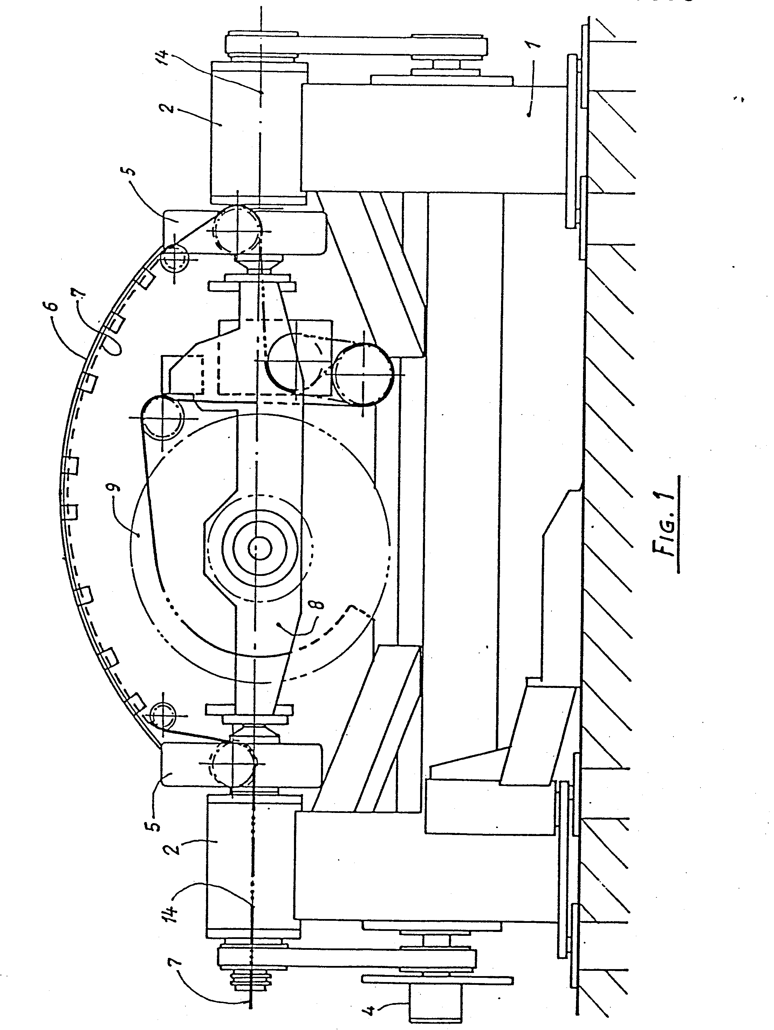

With reference to Fig. 1, the machine consists of a base plate 1, of a main drive motor 4 which feeds power, in the known manner (not shown), to the different parts, two opposite supports 2 between which rotates the structure consisting of two pairs of plates or clamps 5, a frame 8 and a flexible metal element or bow 6 supporting the group of wires 7 and imparting to them the necessary torsion, thanks to the advancement of the wires which are drawn from a flywheel and wound up on a collecting spool 9.

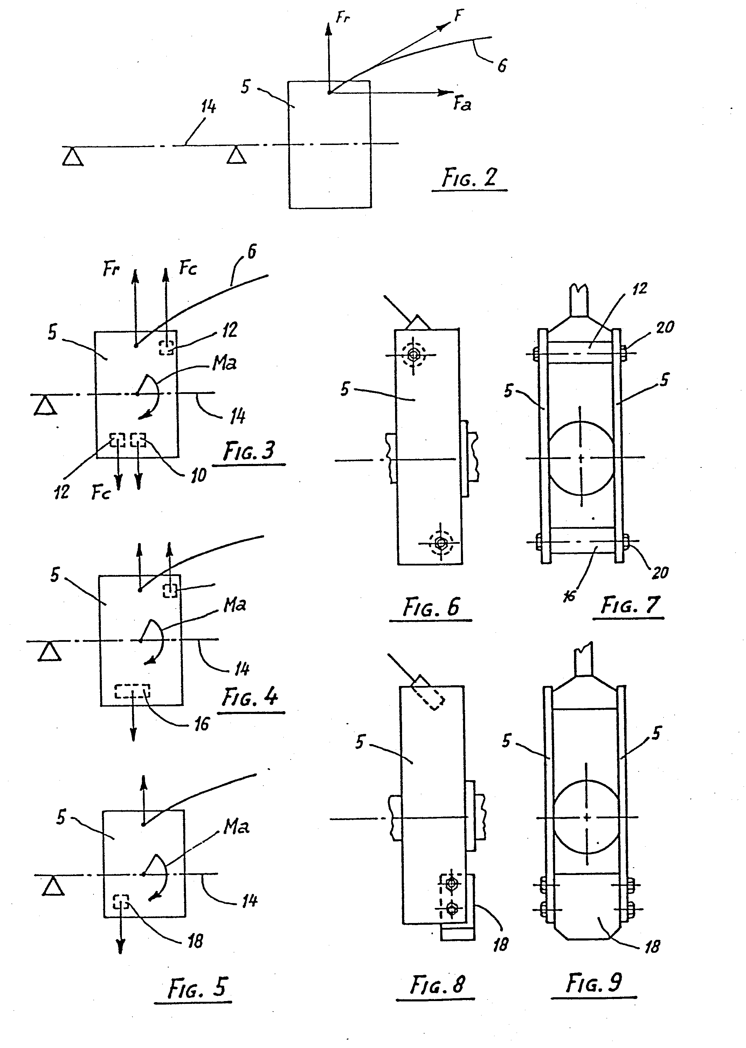

The adoption of a single bow 6 obviously determines on assymetry in the stresses which this transmits to the clamps and which may be represented schematically as a force F (Fig. 2) tangential to the configuration assumed by bow 6 in the operating phase. Said stress can be broken down in its two components $F_a$ (axial) and $F_r$ (radial), as shown in Fig. 2. Component $F_r$ is compensated, according to the invention, by applying a mass 10 on plate 5 in a position opposite to bow 6 with respect to rotating axis 14 (Fig. 3). The application of a sole mass 10 on each one of clamps 5 would not compensate the axial reaction Fa which exerts the greater stress on the supporting bearings of the structure. Should this component be limited, its compensation may be unnecessary, if the bearings are apt to withstand the resulting torque. As an alternative the bearings may be replaced with heavier duty ones. However, also this stress component is compensated, preferably, by applying two additional equal masses 12 fitted laterally with respect to axis 14, as shown in Fig. 3. The two masses are equal, so as to compensate each other, due to the effect of centrifugal force and are set laterally with respect to the vertical axis of symmetry of the plate, in order to compensate axial movement Ma of the structure, acting on the bearings.

In Fig. 4, the masses applied below axis of rotation 14 are incorporated in a single mass 16, equal to the sum of masses 10 and 12 of Fig. 3, thereby providing the same compensating results, whilst affording on even greater structural simplicity.

Lastly, in Fig. 5 a single mass equal to the sum of masses 10 and 12 is contemplated, which compensates the assymetry due to the presence of a single bow, thanks to plates 5 which are not symmetrical with the axis of rotation as in previous cases. More specifically, the portion of plate 5 above axis of rotation 14 is greater than the lower portion and in this case, a single suitably arranged mass is sufficient.

Figs. 6 and 7 are, respectively, side and front views of the compensated plates according to the scheme of Fig. 4. Masses 12 and 16 consist respectively of suitably perforated counter-weights to permit introduction between plates 5 secured by bolts 20 or similar means, and the weight of which is necessarily considered for sizing.

Figs. 8 and 9 are respectively a side view and a front view according to the scheme of Fig. 5 and comprise a single offset compensating mass 18.

In the manner above described, complete balancing of the system is achieved, resulting in savings on power consumption, easier accessibility as well as the possibility to increase further the machine's rotating speed as compared to that of conventional type machines which are not provided with the improvement proposed in this invention.

It is evident that the masses shown in the drawings represent particular and non limitative arrangements for compensation and that the improvements extend also to all equivalent features utilizing the same principle of compensating the assymetry dynamically, due to the elimination of one bow by the provision of at least one additional mass mounted on each collet or between the pair of plates forming the clamp.

C L A I M S

1. Stranding machine for the production of braided cables, metal wire rope and similar means, in which a plurality of metal wires is joined and twisted together thanks to the movement of a rotating structure about an axis, characterized in that said rotating structure comprises an arched or flexible element, provided with eyelets or sheaves, known as a bow (6), to support the wires during rotation, the ends of said bow (6) being secured to pairs of plates or clamps (5) suitably supported for rotation and in that each one of said clamps (5) mounts at least one balancing mass (10), apt to compensate the assymetry of the flexible rotating part of the machine.

2. Stranding machine according to claim 1, characterized in that said mass (10) is mounted on the clamp (5) in a position opposite to the bow (6) with respect to the axis of rotation (14) and compensates the radial component (Fr) exercised by the rotation of the bow (6).

3. Stranding machine according to claim 1, characterized in that it contemplates a mass (10) mounted on the clamp in a position opposite to the bow (6), with respect to the axis of rotation (14), and two additional equal masses (12), said masses being placed on opposite parts with respect to the axis of rotation (14) of the machine and on opposite parts with respect to a vertical plane intersecting the center of the clamps and perpendicular to the axis of rotation.

4. Machine according to claim 1, characterized in that it is provided, on each clamp (5), with two unequal masses (12, 16) situated on opposite parts with respect to the axis of rotation (14).

5. Stranding machine according to claim 1, characterized in that it is provided with clamps (5) which are asymmetrical with respect to the axis of rotation (14), a single compensating mass (18) being mounted on each clamp (5) on the part of shorter length.

6. Stranding machine according to any one of the above preceeding claims, characterized in that each clamp consists of a pair of opposite plates (5) and in that the compensating masses consist of cylindrical bodies equal in length to the distance between a pair of plates (5), perforated axially for mounting between the plates (5) by means of bolts (20) or similar devices.

7. Stranding machine substantially in accordance to that herein described and illustrated.

FIG. 1

*Fig. 2*

*Fig. 3*

*Fig. 4*

*Fig. 5*

*Fig. 6*

*Fig. 7*

*Fig. 8*

*Fig. 9*

## European Patent Office

## EUROPEAN SEARCH REPORT

| | DOCUMENTS CONSIDERED TO BE RELEVANT | | EP 84830045.5 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| A | <u>FR - A1 - 2 318 975</u> (SODETAL)<br>* Totality *<br>-- | 1,6 | D 07 B  3/10 |
| A | <u>DD - A - 0 084 339</u> (FREKE, WEST-PHAL)<br>* Totality *<br>---- | 6 | |

| TECHNICAL FIELDS SEARCHED (Int. Cl. ³) |
|---|
| D 07 B  3/00 |
| D 07 B  7/00 |
| H 01 B 13/00 |

The present search report has been drawn up for all claims

| Place of search | Date of completion of the search | Examiner |
|---|---|---|
| VIENNA | 06-07-1984 | SCHATEK |